# EUROPÄISCHE PATENTSCHRIFT

(11) **EP 1 204 544 B1**
(45) Veröffentlichungstag und Bekanntmachung des Hinweises auf die Patenterteilung: **07.04.2004**
(21) Anmeldenummer: 01947126.7
(22) Anmeldetag: 04.05.2001
(51) Int. Cl.: B60R 21/01, B60R 16/02

(54) **SCHALTUNGSANORDNUNG ZUR ENERGIEVERSORGUNG VON SCHUTZEINRICHTUNGEN FÜR FAHRZEUGINSASSEN**
CIRCUIT ARRANGEMENT FOR POWERING PROTECTION DEVICES FOR THE PASSENGERS OF A VEHICLE
ENSEMBLE CIRCUIT POUR L'ALIMENTATION EN ENERGIE DE SYSTEMES DE PROTECTION POUR DES OCCUPANTS D'UN VEHICULE

(30) Priorität: 31.05.2000 DE 10027007
(43) Veröffentlichungstag der Anmeldung: 15.05.2002
(73) Patentinhaber: ROBERT BOSCH GMBH, 70442 Stuttgart (DE)
(72) Erfinder: MATTES, Bernhard, 74343 Sachsenheim (DE)
(86) Internationale Anmeldenummer: PCT/DE2001/001701
(87) Internationale Veröffentlichungsnummer: WO 2001/092066

(56) Entgegenhaltungen:
- EP-A- 0 629 161
- EP-A- 0 895 901
- EP-A- 0 927 117
- WO-A-91/05680
- WO-A-99/29540
- US-A- 5 621 607

## Beschreibung

### Stand der Technik

Die vorliegende Erfindung betrifft eine Schaltungsanordnung zur Energieversorgung von Schutzeinrichtungen für Fahrzeuginsassen, die eine Kondensatoranordnung aufweist, welche die für die Auslösung der Schutzeinrichtungen erforderliche Energie bereitstellt.

Die in Kraftfahrzeugen installierten Insassenschutzsysteme - dazu gehören Airbags , Sicherheitsgurte etc. - werden mit der Zeit immer komplexer. Insbesondere die Zahl der in den Fahrzeugen eingebauten Airbags wird immer größer. Die Rückhalteeinrichtungen sollten, um den Insassen auch bei mehreren nacheinander erfolgenden Aufprallen Schutz zu bieten, in mehreren aufeinander folgenden Stufen auslösbar sein. In Zukunft wird es wegen der geforderten Komplexität der Schutzeinrichtungen durchaus mehr als 20 Zündkreise für die Auslösung der einzelnen Rückhalteeinrichtungen geben.

Damit all die im Fahrzeug vorhandenen Rückhalteeinrichtungen bei einem Crash auch dann noch aktiviert werden können, wenn die Stromversorgung im Fahrzeug unterbrochen ist, wird, wie z.B. aus der WO 99/29540 (Oberbegrift von Anspruch 1) hervorgeht, ein Energiespeicher im Fahrzeug vorgesehen, welcher die Zündendstufen der einzelnen Rückhalteeinrichtungen im Auslösefall mit der nötigen Energie versorgt. Ein derartiger Energiespeicher besteht aus ein oder mehreren Kondensatoren. In der Regel verwendet man heute Elektrolytkondensatoren, deren Bauvolumen um so größer wird, je mehr Zündkreise mit Energie zu versorgen sind. Wenn bei Mehrfachaufprallen ein zeitlicher Versatz bei der Aktivierung der einzelnen Zündkreise gefordert wird, muß der Elektrolytkondensator eine lange Speicherzeit aufweisen, was aber nur mit einem Kondensator entsprechend großer Bauform machbar ist. Zum Beispiel wäre bei einem Rückhaltesystem mit 6 Zündkreisen und einem Stromverbrauch von z.B. 100 mA ein Elektrolytkondensator, der eine Speicherzeit von ca. 150 ms aufweist, mit einem Bauvolumen von mehr als 5 cm³ erforderlich. Bei noch mehr als 6 Zündkreisen würde das erforderliche Bauvolumen eines Elektrolytkondensators eine solche Größe annehmen, dass dessen Installation in einem Airbag-Auslösegerät problematisch wird.

Wenn man von einem Rückhaltesystem mit etwa 20 Zündkreisen ausgeht, müsste der Energiespeicher in der Lage sein, , mindestens 5 Sekunden lang genügend elektrische Energie zu liefern. Für diese Zeit müßte bei der genannten Zahl von Zündkreisen einschließlich eines die einzelnen Zündkreise ansteuernden Mikrocontrollers ein gesamter Stromverbrauch von 300 mA ermöglicht werden. Der Erfindung liegt nun die Aufgabe zugrunde, die genannten Forderungen mit einem Energiespeicher mit möglichst geringem Bauvolumen zu realisieren.

### Vorteile der Erfindung

Die genannte Aufgabe wird mit den Merkmalen des Anspruchs 1 dadurch gelöst, dass eine als Energiespeicher dienende Kondensatoranordnung aus mehreren in Reihe geschalteten Doppelschichtkondensatoren und einem Elektrolytkondensator besteht, der seine Ladung aus den Doppelschichtkondensatoren erhält, welche eine höhere Kapazität aber eine geringere Nennspannung als der Elektrolytkondensator aufweisen, und dass der Elektrolytkondensator die für die Zündendstufen der Schutzeinrichtungen erforderlichen Zündspannungen liefert.

Doppelschichtkondensatoren, deren Eigenschaften darin bestehen, dass sie eine sehr hohe Kapazität (mehr als 7 Farat) und eine lange Speicherzeit (größer als 5 Sekunden) aufweisen, wobei das Bauvolumen ca. 3 cm³ beträgt, sind aus der US 5,621,607 an sich bekannt. Doppelschichtkondensatoren haben allerdings eine relativ geringe Nennspannung (ca. 2,3 V), welche für die Zündung einer Zündendstufe einer Rückhalteeinrichtung zu gering ist. Der zusätzlich zu den Doppelschichtkondensatoren eingesetzte Elektrolytkondensator hat eine höhere Nennspannung (ca. 63 V) als die Doppelschichtkondensatoren und liefert eine ausreichend hohe Zündspannung für die Zündendstufen. Da der Elektrolytkondensator ausschließlich für die Energieversorgung der Zündendstufen vorgesehen ist, reicht seine mit einem relativ geringem Bauvolumen (6,2 cm³) realisierbare Kapazität von ca. 1,0 mF sicher aus. Mit der erfindungsgemäßen Konstellation von Energiespeichern kommt man insgesamt auf einen Bauvolumen von ca. (18 cm³), das erheblich geringer ist (ca. 50 mal) als wenn man mit einem Elektrolytkondensator einen Energiespeicher für eine hohe Zahl von Zündkreisen (z.B. 20) verwirklichen müßte.

Vorteilhafte Weiterbildungen der Erfindung gehen aus den Unteransprüchen hervor.

Es wird vorzugsweise ein Spannungswandler an die Reihenschaltung der Doppelschichtkondensatoren angeschlossen, der die an ihnen abgreifbare Spannung auf die für den Elektrolytkondensator erforderliche Ladespannung heraufsetzt.

Ein besonderer Vorteil besteht darin, dass die Reihenschaltung der Doppelschichtkondensatoren neben der Ladespannung für den Elektrolytkondensator auch die Versorgungsspannung für einen die Zündendstufen der Schutzeinrichtung steuernden Mikrocontroller liefert.

Zweckmäßigerweise wird jedem Doppelschichtkondensator ein ohmischer Widerstand parallel geschaltet, um die an den Doppelschichtkondensatoren abgreifbaren Spannungen zu symmetrisieren.

### Beschreibung eines Ausführungsbeispiels

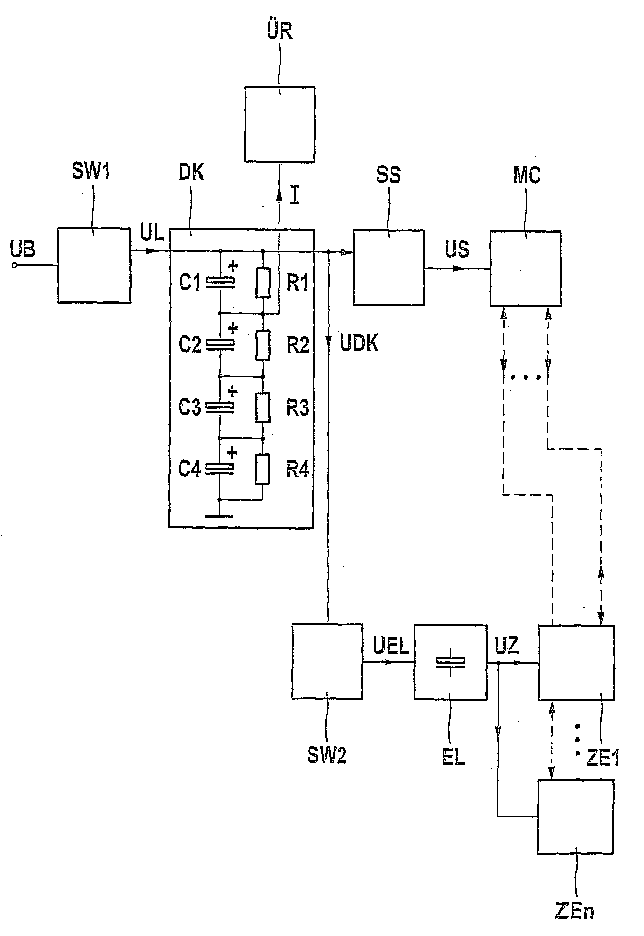

In der Zeichnung ist ein Blockschaltbild einer Schaltungsanordnung dargestellt, welche mehrere Zündendstufen ZE1,...,ZEn von n Rückhalteeinrichtungen in einem Fahrzeug und einen diese Zündendstufen ansteuerenden Signalprozessor SP mit Energie versorgt.

Die dargestellte Schaltungsanordnung zur Energieversorgung weist einen ersten Energiespeicher DK in Gestalt von vier in Reihe geschalteten Doppelschichtkondensatoren C1, C2, C3 und C4 auf. Die erforderliche Ladespannung UL (z.B. 8,8 +/-0,4 V) für die Reihenschaltung der Doppelschichtkondensatoren C1,...,C4 stellt ein Spannungswandler SW1 (Aufwärts/Abwärts-Spannungswandler) aus der von der Fahrzeugbatterie gelieferten Batteriespannung UB zur Verfügung.

Der Aufbau und die Eigenschaften von Doppelschichtkondensatoren sind in der US 5,621,607 beschrieben. Die Elektroden dieser Doppelschichtskondensatoren bestehen aus einer Komposition von Aluminium und Kohlenstoff und bilden daher einen relativ geringen inneren ohmischen Widerstand des Kondensators. Als Elektrolytmaterial befindet sich z.B. eine verdünnte Schwefelsäure in den Doppelschichtkondensatoren. Durch die Verwendung eines chemisch inerten Kohlenstoffmaterials für die Kondensatorelektroden kann eine extrem vergrößerte Oberfläche von bis zu 3000 m²/g erzielt werden. Wesentliche Vorteile solcher Doppelschichtkondensatoren sind eine extrem hohe Kapazität von mehr als 7F, eine lange Speicherzeit von mehr als 5s und in Verbindung damit ein relativ kleines Bauvolumen.

Da die Nennspannung eines Doppelschichtkondesators allerdings nicht größer als 2,3 V ist, werden, wie in der Zeichnung dargestellt, mehrere solche Doppelschichtkondensatoren C1, ,C4 in Reihe geschaltet, so dass die gesamte an der Reihenschaltung abgreifbare Nennspannung UDK einem Vielfachen (hier Vierfachen) der Nennspannung eines einzelnen Doppelschichtkondensators beträgt. Die Zahl der in Reihe geschalteten Doppelschichtkondensatoren hängt davon ab, welche Ausgangsspannung UDK des aus Doppelschichtkondensatoren gebildeten Energiespeichers gefordert wird. Ein Kondensatorblock DK aus 4 Doppelschichtkondensatoren C1,...,C4 hätte ein Bauvolumen von maximal 11,5 cm³ bei einem gesamten mittleren Dauer-Stromverbrauch des Rückhaltesystems von 0,5 A und eine Überlebenszeit (Speicherzeit) von ca. 7 Sekunden.

Die an der Reihenschaltung DK der Doppelschichtkondensatoren C1,...,C4 abgegriffene Ausgangsspannung UDK wird einem Spannungswandler SW2 zugeführt, der die Ausgangsspannung UDK in die für den Elektrolytkondensator EL erforderliche Ladespannung UEL (z.B. 45 V) heraufsetzt. Am Elektrolytkondensator EL wird die Zündspannung UZ (bzw. Zündstrom) für die vorhandenen Zündendstufen ZE1,...,ZEn abgegriffen. Geht man von einem Elektrolytkondensator mit einer Kapazität von 1,0 mF und einer Nennspannung von 63 V aus und setzt voraus, dass maximal 14 Zündendstufen gleichzeitig gezündet werden sollen, so wird dem Elektrolytkondensator EL eine Stromspitze von ca. 17 A entnommen. Bei einem Gleichstrom-Entladewiderstand dieses Elektrolytkondensators EL von maximal 0,6 Ω fallen an ihm intern 10,2 V ab, so dass an den 14 auszulösenden Zündendstufen im ersten Moment des Zündens noch 34,8 V anliegen. Nach Zündung der 14 Zündendstufen, von denen jede insgesamt unter Berücksichtigung seiner Verluste 21 mJ Energie verbraucht, bleiben dann noch etwa 26 V Ladespannung am Elektrolytkondensator EL stehen. Diese Restladespannung reicht aus, um eine spätere Zündung weiterer Zündendstufen vorzunehmen.

Am Ausgang der Reihenschaltung DK der Doppelschichtkondensatoren wird nicht nur die Ladespannung für den Elektrolytkondensator El abgegriffen, sondern auch eine Versorgungsspannung US für einen Mikrocontroller MC, welcher die Zündendstufen ZE1,...,ZEn steuert und eventuell auch noch eine Fehlerdiagnose durchführt. Vorzugsweise gewinnt ein Spannungsstabilisator SS aus der Ausgangsspannung UDK der Reihenschaltung DK der Doppelschichtkondensatoren C1,...,C4 eine stabile Versorgungsspannung US für den Mikrocontroller MC.

Den einzelnen Doppelschichtkondensatoren C1, C2, C3 und C4 ist jeweils ein ohmischer Widerstand R1, R2, R3 und R4 (z.B. 5 kΩ) parallel geschaltet. Diese Widerstände R1,...,R4 dienen zur Symmetrierung der Kondensatorspannungen, so dass an jedem Kondensator C1,...,C4 die gleiche Spannung zur Verfügung steht und eine spezifizierte Nennspannung nicht überschritten wird.

Wie dem in der Zeichnung dargestellten Ausführungsbeispiel zu entnehmen ist, kann an der Reihenschaltung der Widerstände R1,...,R4 auch noch ein Strom I abgegriffen werden, mit dem ein oder mehrere Magneten zu Aktivierung eines oder mehrerer Überrollbügel ÜR gespeist werden.

Die vorangehend beschriebene Anordnung eines ersten Energiespeichers aus mehreren Doppelschichtkondensatoren und eines zweiten Energiespeichers in Gestalt eines Elektrolytkondensators (vorzugsweise Aluminium-Elektrolytkondensator), gewährleistet eine hohe Verfügbarkeit der Schutzfunktion aller benötigten Insassenschutzeinrichtungen und das auch bei Mehrfachaufprallen unterschiedlicher Art - z.B. Frontal und anschließendem Seitencrash, Frontal- und anschließendem Heckaufprall oder Seitencrash und anschließendem Überrollvorgang etc..

## Patentansprüche

1. Schaltungsanordnung zur Energieversorgung von Schutzeinrichtungen für Fahrzeuginsassen, die eine Kondensatoranordnung aufweist, welche die für die Auslösung der Schutzeinrichtungen erforderliche Energie bereitstellt, **dadurch gekennzeichnet, dass** die Kondensatoranordnung aus mehreren in Reihe geschalteten Doppelschichtkondensatoren (C1, C2, C3, C4) und einem Elektrolytkondensator (EL) besteht, der seine Ladung aus den Doppelschichtkondensatoren (C1, C2, C3, C4) erhält, welche eine höhere Kapazität aber eine geringere Nennspannung als der Elektrolytkondensator (EL) aufweisen, und dass der Elektrolytkondensator (EL) die für die Zündendstufen (ZE1,...,ZEn) der Schutzeinrichtungen erforderlichen Zündspannungen (UZ) liefert.

2. Schaltungsanordnung nach Anspruch 1, **dadurch gekennzeichnet, dass** an die Reihenschaltung der Doppelschichtkondensatoren (C1, C2, C3, C4) ein Spannungswandler (SW2) angeschlossen ist, der die an den Doppelschichtkondensatoren (C1, C2, C3, C4) abgreifbare Spannung (UDK) auf die für den Elektrolytkondensator (EL) erforderliche Ladespannung (UEL) heraufsetzt.

3. Schaltungsanordnung nach Anspruch 1, **dadurch gekennzeichnet, dass** die Reihenschaltung der Doppelschichtkondensatoren (C1, C2, C3, C4) die Versorgungsspannung (US) für einen die Zündendstufen (ZE1,...,ZEn) der Schutzeinrichtung steuernden Mikrocontroller (MC) liefert.

4. Schaltungsanordnug nach Anspruch 1, **dadurch gekennzeichnet, dass** jedem Doppelschichtkondensator (C1, C2, C3, C4) ein ohmscher Widerstand (R1, R2, R3, R4) parallel geschaltet ist zur Symmetrierung der an den Doppelschichtkondensatoren (C1, C2, C3, C4) auftretenden Spannungen.

## Claims

1. Circuit arrangement for powering protection devices for vehicle occupants, which has a capacitor arrangement which makes available the power necessary to trigger the protection devices, **characterized in that** the capacitor arrangement is composed of a plurality of double-layer capacitors (C1, C2, C3, C4) which are connected in series, and an electrolytic capacitor (EL) which receives its charge from the double-layer capacitors (C1, C2, C3, C4) which have a higher capacitance but a lower rated voltage than the electrolytic capacitor (EL), and **in that** the electrolytic capacitor (EL) supplies the firing voltages (UZ) which are necessary for the firing output stages (ZE1,...,ZEn) of the protection devices.

2. Circuit arrangement according to Claim 1, **characterized in that** a voltage transformer (SW2) is connected to the series circuit of the double-layer capacitors (C1, C2, C3, C4), which voltage transformer (SW2) steps up the voltage (UDK) which can be tapped at the double-layer capacitors (C1, C2, C3, C4) to the charge voltage (UEL) which is necessary for the electrolytic capacitor (EL).

3. Circuit arrangement according to Claim 1, **characterized in that** the series circuit of the double-layer capacitors (C1, C2, C3, C4) supplies the supply voltage (US) for a microcontroller (MC) which controls the firing output stages (2E1,...,ZEn) of the protection device.

4. Circuit arrangement according to Claim 1, **characterized in that** an ohmic resistor (R1, R2, R3, R4) is connected in parallel with each double-layer capacitor (C1, C2, C3, C4) in order to balance the voltages occurring at the double-layer capacitors (C1, C2, C3, C4).

## Revendications

1. Dispositif de circuit pour l'alimentation en énergie de systèmes de protection pour des occupants d'un véhicule, présentant un ensemble condensateur qui met à disposition l'énergie nécessaire au déclenchement des systèmes de protection,
**caractérisé en ce que**
l'ensemble condensateur est constitué de plusieurs condensateurs (C1, C2, C3, C4) à double couche montés en série, et d'un condensateur électrolytique (EL) qui obtient sa charge des condensateurs à double couche (C1, C2, C3, C4), lesquels présentent une capacité supérieure mais une tension nominale inférieure à celles du condensateur électrolytique (EL), et le condensateur électrolytique (EL) livre les tensions d'allumage (UZ) nécessaires aux étages d'allumage (ZE1,....ZEn) des systèmes de protection.

2. Dispositif de circuit selon la revendication 1,
**caractérisé en ce qu'**
un transformateur de tension (SW2) est raccordé au montage en série des condensateurs à double couche (C1, C2, C3, C4), qui augmente la tension (UDK) pouvant être prélevée aux condensateurs à double couche (C1, C2, C3, C4) à la tension de charge (UEL) nécessaire au condensateur électrolytique (EL).

3. Dispositif de circuit selon la revendication 1,
**caractérisé en ce que**
le montage en série des condensateurs à double couche (C1, C2, C3, C4) livre la tension d'alimentation (US) d'un microcontrôleur (MC) commandant les étages d'allumage (ZE1, ..., ZEn) du système de protection.

4. Dispositif de circuit selon la revendication 1,
**caractérisé en ce qu'**
une résistance ohmique (R1, R2, R3, R4) est montée en parallèle à chaque condensateur à double couche (C1, C2, C3, C4) pour l'équilibrage des tensions produites aux condensateurs à double couche (C1, C2, C3, C4).
